# EUROPÄISCHE PATENTSCHRIFT

(11) **EP 2 485 925 B1**
(45) Veröffentlichungstag und Bekanntmachung des Hinweises auf die Patenterteilung: **03.06.2015**
(21) Anmeldenummer: 10740232.3
(22) Anmeldetag: 06.08.2010
(51) Int. Cl.: B60S 1/16, H02K 5/22

(54) **SCHEIBENWISCHERVORRICHTUNG**
WINDSHIELD WIPER DEVICE
DISPOSITIF D'ESSUIE-GLACE

(30) Priorität: 05.10.2009 DE 102009045339
(43) Veröffentlichungstag der Anmeldung: 15.08.2012
(73) Patentinhaber: Robert Bosch GmbH, 70442 Stuttgart (DE)
(72) Erfinder: KASTINGER, Guenter, 76571 Gaggenau-Sulzbach (DE); HUESGES, Mario, 77830 Buehlertal (DE); OBERT, Mike, 76593 Gernsbach (DE); LAUK, Detlef, 77871 Renchen (DE); RIEDINGER, Klaus, 76571 Gaggenau (DE)
(86) Internationale Anmeldenummer: PCT/EP2010/061462
(87) Internationale Veröffentlichungsnummer: WO 2011/042233

(56) Entgegenhaltungen:
- EP-A2- 2 139 096
- DE-A1- 3 927 818
- DE-A1-102006 054 186
- FR-A1- 2 854 023

## Beschreibung

Die vorliegende Erfindung betrifft eine Scheibenwischervorrichtung für ein Kraftfahrzeug, insbesondere für einen Frontscheibenwischer, mit einem Wischermotor, welcher in einen Gehäusegrundkörper eingesetzt ist, wobei der Gehäusegrundkörper einen Gehäuseabschnitt zur elektrischen Kontaktierung des Wischermotors aufweist, an dem ein Anschlussstecker oder eine Anschlussbuchse vorgesehen ist.

### Stand der Technik

Derartige Scheibenwischervorrichtungen sind aus dem Stand der Technik bekannt. Derzeit werden Wischeranlagen überwiegend als kompakte Baugruppen gefertigt. Insbesondere bei Wischermotoren ist die Steckerposition zur Stromversorgung des Wischermotors von dem Kabelbaumverlegungskonzept des jeweiligen Fahrzeugherstellers abhängig, was dazu führt, dass die Steckerposition von Fahrzeug zu Fahrzeug bzw. von Projekt zu Projekt unterschiedlich ist. Je nach Motorenbaureihe sind Stecker zur Stromversorgung des Wischermotors an verschiedenen Motorenbauteilen integriert. Folglich muss zur Realisierung jeder unterschiedlichen Steckerlage ein neues Werkzeug zur Herstellung vorgesehen werden bzw. ein neues daran angepasstes Getriebegehäuse mit entsprechend ausgerichteter Steckerlage bereitgestellt werden, was mit erhöhten Fertigungs- und Montagekosten einhergeht.

Aus der nicht vorveröffentlichten EP 2 139 096 A2 ist ein Hilfsantrieb für den Antrieb von Scheibenwischeranlagen bekannt, bei denen ein Anschlussstecker lösbar am Gehäuseabschnitt angeordnet ist, und in mehreren Steckpositionen daran befestigbar ist.

Dokument DE 10 2006 054186 A1 offenbart eine Scheibenwischervorrichtung gemäß dem Oberbegriff des Anspruchs 1.

### Offenbarung der Erfindung

Es ist daher Aufgabe der vorliegenden Erfindung, eine Scheibenwischervorrichtung bereitzustellen, die eine einfache und flexible Anpassung der Steckerlage an Einbausituationen verschiedener Motorenbaureihen der Fahrzeughersteller ermöglicht.

Diese Aufgabe wird erfindungsgemäß dadurch gelöst, dass der Anschlussstecker oder die Anschlussbuchse lösbar an dem Gehäuseabschnitt in mindestens zwei Positionen befestigbar ist, wobei mehrere Kühl- und Versteifungsrippen an dem Gehäuseabschnitt vorgesehen sind.

### Vorteile der Erfindung

Die erfindungsgemäße Scheibenwischervorrichtung mit den Merkmalen des unabhängigen Anspruchs 1 hat somit den Vorteil, dass der als separates Bauteil ausgeführter Anschlussstecker in mindestens zwei verschiedenen Steckerlagen an dem Gehäusegrundkörper, insbesondere an dem Gehäusekontaktierabschnitt, befestigt werden kann. Dadurch wird es möglich, die Ausrichtung des Steckers an die durch den Fahrzeugtyp vorgegebenen geometrischen Abmessungen auszurichten und den Anschlussstecker entsprechend an dem Gehäusegrundkörper zu montieren. Der Anschlussstecker kann somit ohne funktions- und qualitätseinschränkenden Merkmale in verschiedenen Stecklagen an dem Gehäuse montiert und so an die Gegebenheiten des jeweiligen Fahrzeugtyps angepasst werden.

Eine besonders einfache Ausführungsform der Erfindung sieht vor, zur lösbaren Fixierung des Anschlusssteckers oder der Anschlussbuchse an dem Gehäuseabschnitt mindestens einen Befestigungsbereich auszubilden. Beispielsweise kann dieser Befestigungsbereich als umlaufende Befestigungsnut oder als Befestigungsöffnung ausgebildet sein.

Um die Kontaktierung zwischen Anschlussstecker oder Anschlussbuchse oder dem Gehäusegrundkörper zu gewährleisten, können an dem Anschlussstecker insbesondere rotationssymmetrisch angeordnete Kontaktfedern vorgesehen sein, die mit an dem Gewindeabschnitt ausgebildeten Kontaktierungen durch Positionierung des Anschlusssteckers an dem Gehäuseabschnitt in Verbindung gebracht werden können.

In einer weiteren Ausführungsform der Erfindung ist zum Schutz des Wischermotors vor Schmutz oder Feuchtigkeit vorgesehen, an dem Anschlussstecker oder der Anschlussbuchse ein Dichtelement vorzusehen, welches so angeordnet ist, dass es die Kontaktfläche an dem Gehäuseabschnitt und die Kontakte des Anschlusssteckers oder der Anschlussbuchse im wesentlichen vollständig von der Umgebung abschirmt. Natürlich ist es auch möglich, das Dichtelement an dem Gehäuseabschnitt vorzusehen, insbesondere anzuspritzen.

Dabei ist es möglich, das Dichtelement einteilig mit dem Anschlussstecker oder der Anschlussbuchse bzw. den Gehäuseabschnitt auszubilden, um die Anzahl der zu montierenden Bauteile zu verringern und Montagefehler aufgrund von falsch oder unzureichend eingesetzten Dichtelementen auszuschließen.

Zur Vereinfachung der Montage des Anschlusssteckers bzw. der Anschlussbuchse an dem Gehäuseabschnitt kann es zweckmäßig sein, den Anschlussstecker bzw. die Anschlussbuchse so auszubilden, dass sie mittels einer reibschlüssigen oder formschlüssigen Verbindung an dem Gehäuseabschnitt befestigbar ist.

Alternativ ist es möglich, Arretierungsmittel, insbesondere Crimphaken, Bolzen oder Klemmhaken zur Fixierung des Anschlusssteckers in seiner Steckposition an dem Gehäuseabschnitt vorzusehen.

Die Befestigungsöffnungen am Getriebegehäuse bzw. am Gehäuseabschnitt können beispielsweise rotationssymmetrisch über den Umfang des Gehäuseabschnittes verteilt sein und beispielsweise in 90 °-Kreisabschnitten angeordnet sein. Für diesen Fall wären beispielsweise vier Stecklagen des Anschlusssteckers oder der Anschlussbuchse mittels eines solchen Gehäuseabschnitts möglich. Entsprechend können auch die Kontaktfedern rotationssymmetrisch um 90 ° versetzt an dem Gehäuseabschnitt vorgesehen sein. Dabei kann zweckmäßig sein, die Kontaktfedern um 45 ° versetzt zu den Befestigungsöffnungen in dem Gehäuseabschnitt anzuordnen, um zusätzlich zu der Kontaktierung auch eine Positionierungsfunktion den Befestigungsöffnungen bzw. den Kontaktierungen zuzuordnen. So wird ein automatisches Positionieren während der Montage ermöglicht. Dieser Effekt kann natürlich auch durch einen Versatz zwischen 0 uns 90° erreicht werden.

Die Befestigung des Anschlusssteckers bzw. der Anschlussbuchse an dem Gehäuseabschnitt kann beispielsweise auch mittels mindestens einem Rastelement bereitgestellt werden, welches zur Positionierung des Anschlusssteckers bzw. der Anschlussbuchse an dem Gehäusegrundkörper in mindestens eine an dem Gehäusegrundkörper ausgebildeten Rastvertiefung eingreift. Diese Rastvertiefungen können beispielsweise ebenfalls rotationssymmetrisch über das Getriebegehäuse verteilt angeordnet werden. Der Anschlussstecker kann dadurch rotationssymmetrisch in jede Lage bzw. in einem festgelegten Rasterabstand an dem Gehäusegrundkörper befestigt werden, so dass verschiedene Steckerlagen um bis zu 360 ° versetzt mit einem einzigen Bauteil realisiert werden können.

Zur Vergrößerung der Oberfläche des Gehäuseabschnitts und zur Verbesserung der Kühlung der Bauteile sind Kühl- und Versteifungsrippen an dem Gehäuseabschnitt vorgesehen.

Die Montageschritte können so aufgebaut sein, dass sie sehr leicht in eine Montagestraße integriert werden können. Die Notwendigkeit eines manuellen Verdrehens des Anschlusssteckers in die gewünschte Steckerlage kann somit vermieden werden, was mit einer Reduzierung der Montagekosten einhergeht.

Die oben aufgeführten Vorteile der Erfindung sind zwar auf den Einsatz in Frontscheibenwischeranlagen ausgerichtet. Ein Einsatz beispielsweise in Heckscheibenwischeranlagen oder in Fensterhebereinrichtungen ist jedoch gleichermaßen denkbar.

Hinsichtlich weiterer vorteilhafter Ausgestaltungen und Weiterbildungen der Erfindung wird auf die Unteransprüche sowie die nachfolgende Beschreibung eines Ausführungsbeispiels anhand der beiliegenden Zeichnung verwiesen.

### Kurze Beschreibung der Zeichnungen

Es zeigt:
- Figur 1: eine Teildarstellung eines Gehäusegrundkörpers mit einem erfindungsgemäßen Gehäuseabschnitt;
- Figur 2 - Figur 4: den Gehäuseabschnitt gemäß Figur 1 mit in verschiedenen Stecklagen montiertem Anschlussstecker.

### Ausführungsformen der Erfindung

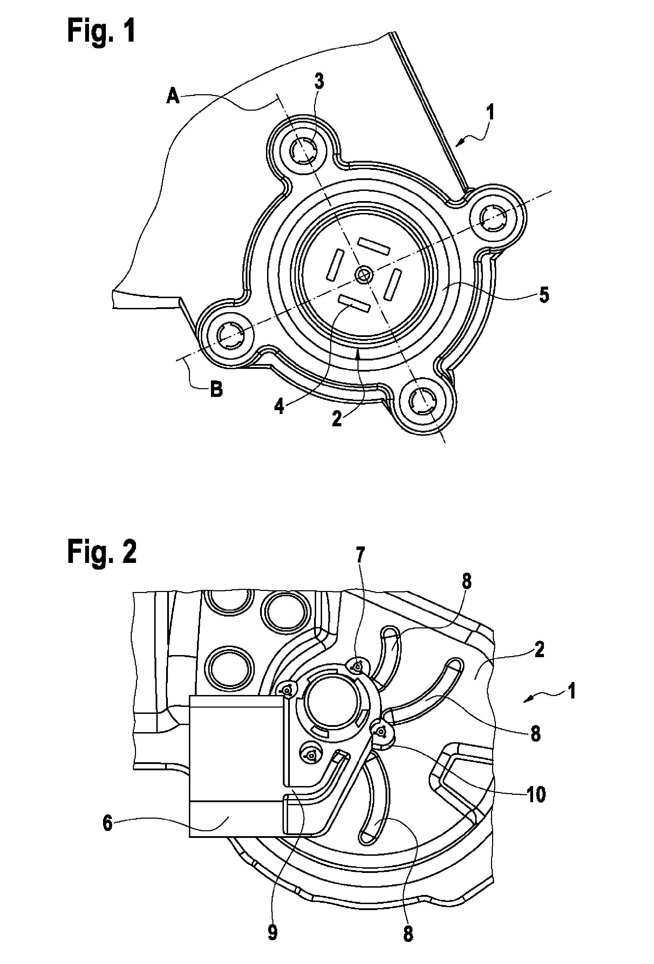

Die Figur 1 zeigt eine Teildarstellung eines Gehäusegrundkörpers 1 einer erfindungsgemäßen Scheibenwischervorrichtung für ein Kraftfahrzeug, insbesondere für einen Frontscheibenwischer, in welchem ein nicht dargestellter Wischermotor eingesetzt ist.

Der Gehäusegrundkörper 1 weist einen Gehäuseabschnitt 2 zur elektrischen Kontaktierung des Wischermotors auf. An dem Befestigungsabschnitt 2 sind vier rotationssymmetrisch angeordnete Befestigungsöffnungen 3 vorgesehen, von denen jeweils zwei auf einer gemeinsamen Symmetrieachse A, B angeordnet sind. Die Befestigungsöffnungen 3 sind um 90° versetzt zueinander über den Kreisumfang des Gehäuseabschnittes 2 gleichmäßig verteilt angeordnet. An dem Gehäuseabschnitt 2 sind des Weiteren vier Kontaktierungen hier in der Form von Kontaktfedern 4 vorgesehen, die ebenfalls rotationssymmetrisch um 90 ° zueinander versetzt angeordnet sind.

Um neben der Kontaktierung auch noch eine Positionierungsfunktion von Befestigungsöffnungen 3 und Kontaktfedern 4 zu erreichen, sind die Kontaktfedern 4 um 45 ° versetzt zu den Befestigungsöffnungen 3 angeordnet. Den gleichen Effekt würde man natürlich auch erreichen, wenn ein Versatz zwischen 0° und 90° zwischen Befestigungsöffnungen 3 und Kontaktfedern 4 vorgesehen wird.

Zur Abdichtung der Kontaktierungen vor Feuchtigkeit und Verschmutzung ist zwischen den Befestigungsöffnungen 3 und den Kontaktfedern 4 ein umlaufendes Dichtelement 5 vorgesehen. In dem in Figur 1 gezeigten Ausführungsbeispiel ist das Dichtelement 5 mit runder Dichtgeometrie an den Gehäuseabschnitt 2 montiert. Die runde Dichtgeometrie wird sichergestellt, dass bei einem Drehen des Anschlussstecker 6 auf dem Gehäuseabschnitt 2 die Rotationsbewegung keine Hemmung erfährt. In einem alternativen Ausführungsbeispiel ist das Dichtelement 5 nicht am Gehäuseabschnitt 2 angeordnet sondern am Anschlussstecker 6.

Figur 2 zeigt einen Gehäusegrundkörper 1 mit einem Gehäuseabschnitt 2, an welchen ein Anschlussstecker 6 über Steckverbindungen 7 an dem Gehäuseabschnitt 2 in einer ersten Steckposition montiert ist. Die Positionierung des Anschlusssteckers 6 erfolgt zum einen über die Anordnung der vier Befestigungsöffnungen 3 in dem Gehäuseeabschnitt 2. An der Oberfläche des Gehäuseabschnitts 2 sind stegförmige Kühl- und Versteifungsrippen 8, 9 angeordnet.

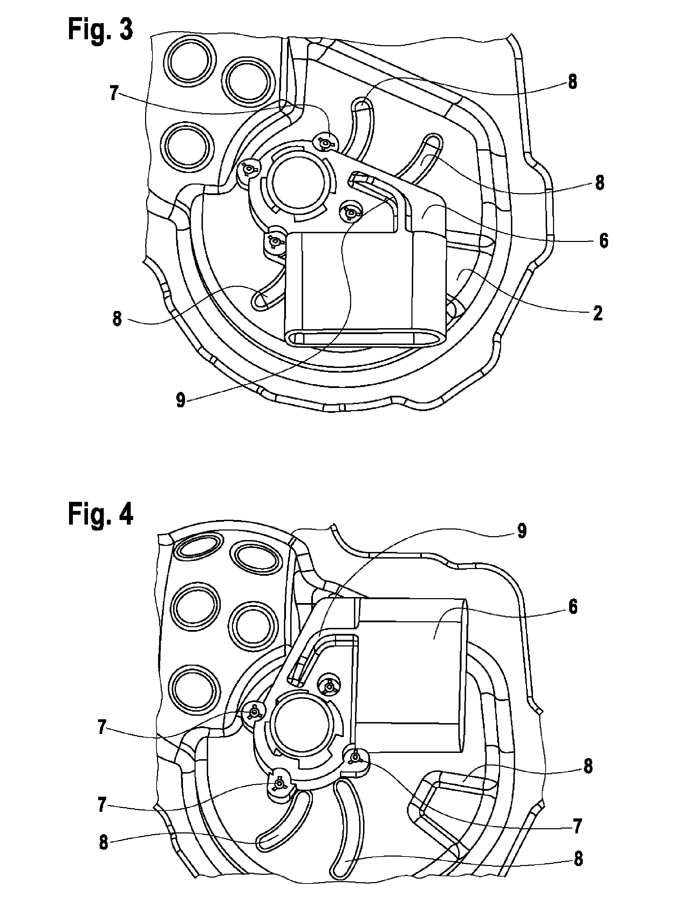

In den Figuren 3 und 4 sind zwei weitere mögliche Steckerlagen des Anschlusssteckers 6 gezeigt. Wie den Zeichnungen näher zu entnehmen ist, befindet sich immer nur ein in die Befestigungsöffnungen 3 eingebrachter Befestigungsdorn mit dem Anschlussstecker 6 in direktem Eingriff.

Die Befestigungsöffnungen 3 sind hier gegenüber der Grundfläche des Gehäuseabschnittes 2 erhöht ausgebildet, so dass die sich nicht in Eingriff mit dem Anschlussstecker 6 befindliche Befestigungsöffnung 3 zur Positionierung des Anschlusssteckers 6 sowie zu dessen Stabilisierung in dieser Position beitragen. Dazu sind am Anschlussstecker 6 Aussparungen 10 ausgebildet, die so an dem Anschlussstecker 6 angeordnet sind, dass die Erhöhungen der Befestigungsöffnungen 3 in die Aussparungen 10 des Anschlussstecker eingreifen und so eine Rotationsbewegung des AQnschlusssteckers blockieren.

In einem weiter nicht näher dargestellten Ausführungsbeispiel der Erfindung erfolgt die Befestigung des Anschlusssteckers an dem Gehäuseabschnitt durch einen an dem Anschlussstecker ausgebildeten Ring, der ein Rastelement aufweist, welches zur Positionierung des Anschlusssteckers in an dem Gehäuseabschnitt oder dem Gehäusegrundkörper ausgebildete Rastvertiefungen eingreift. Dazu ist der Gehäusegrundkörper zumindest im Bereich des Gehäuseabschnittes genauso wie der Anschlussbereich des Anschlusssteckers im Wesentlichen zylindrisch bzw. rotationssymmetrisch ausgebildet. Auch die Rastvertiefungen sind rotationssymmetrisch über den Gehäuseabschnitt in einem festgelegten Rasterabstand verteilt angeordnet. Das durch die Rastvertiefungen gebildete Raster ermöglicht eine variable Anordnung des Anschlusssteckers und somit eine Anpassung an das Kabelbaumverlegungskonzept eines jeden Fahrzeugs durch die Möglichkeit der Realisierung verschiedener Montage- bzw. Anschlusssteckerlagen durch eine Verstellbarkeit des Anschlusssteckers um bis zu 360°.

Alternativ kann der Befestigungsring als separates Bauteil ausgebildet sein, das in den Bereich der Rastvertiefungen einsetzbar ist. Dazu weist der Befestigungsring einen federnd gelagerten Rastbolzen auf, der in die einzelnen Rastvertiefungen bewegbar und bei Erreichen einer gewünschten Montagelage oder Anschlusssteckerlage in einer solchen Rastvertiefung beispielsweise durch aktives Verschieben in Richtung der Rastvertiefung fixierbar ist. Zur Änderung der Steckerlage wird der Rastbolzen einfach wieder aus der Rastvertiefung herausbewegt und anschließend der Befestigungsring in die neue Montage- bzw. Steckerlage gebracht. Zum einfachen Verändern der Steckerlage durch Drehen des Anschlusssteckers bzw. des Befestigungsrings kann eine Montagehilfe beispielsweise in der Form eines einfachen Blechstreifens vorgesehen sein, welcher so eingesetzt wird, dass er beim Verdrehen des Anschlusssteckers die Rastvertiefungen, die zur Realisierung einer bestimmten Steckerlage nicht benötigt werden, verdeckt. So wird ein vorzeitiges Einrasten des Rastbolzens in eine der nicht benötigten Rastvertiefungen verhindert.

Eine Befestigung des Anschlusssteckers an den Gehäuseabschnitt mittels Klemmhaken ist in einem nicht näher gezeigten Ausführungsbeispiel realisiert, indem die Klemmhaken an dem Anschlussstecker durch eine darin ausgebildete Öffnung gesteckt werden und mit ihren einen Ende an der Innenseite des Anschlusssteckers anliegen. An dem gegenüberliegenden Ende übergreifen die Klemmhaken einen an dem Gehäuseabschnitt ausgebildeten Absatz, wodurch sich eine Klemmverbindung zwischen dem Anschlussstecker und dem Gehäuseabschnitt einstellt.

Schließlich wird in einem Ausführungsbeispiel eine Befestigung erreicht, in dem Crimphaken an dem Anschlussstecker ausgebildet sind, die in regelmäßigen Abständen auf dem Umfang des Anschlusssteckers verteilt sind und in in dem Gehäuseabschnitt ausgebildete Vertiefungen eingreifen, indem sie beispielsweise über diese Vertiefungen in den Gehäuseabschnitt gebogen werden.

## Patentansprüche

1. Scheibenwischervorrichtung für ein Kraftfahrzeug, insbesondere für einen Frontscheibenwischer, mit einem Wischermotor, welcher in einen Gehäusegrundkörper (1) eingesetzt ist; wobei der Gehäusegrundkörper (1) einen Gehäuseabschnitt (2) zur elektrischen Kontaktierung des Wischermotors aufweist, an dem ein Anschlussstecker (6) oder eine Anschlussbuchse vorgesehen ist, **dadurch gekennzeichnet, dass** der Anschlussstecker (6) oder die Anschlussbuchse lösbar an dem Gehäuseabschnitt (2) angeordnet ist und in mindestens zwei Steckpositionen daran befestigbar ist wobei mehrere Kühl- und Versteifungsrippen (8, 9) an dem Gehäuseabschnitt (2) vorgesehen sind.

2. Scheibenwischervorrichtung nach Anspruch 1, **dadurch gekennzeichnet, dass** an dem Gehäusegrundkörper (1) mindestens ein Befestigungsbereich für den Anschlussstecker (6) ausgebildet ist.

3. Scheibenwischervorrichtung nach Anspruch 2, **dadurch gekennzeichnet, dass** der Befestigungsbereich als umlaufende Befestigungsnut oder als Befestigungsöffnung (3) ausgebildet ist.

4. Scheibenwischervorrichtung nach Anspruch 3, **dadurch gekennzeichnet, dass** mehrere Befestigungsöffnungen (3) an dem Gehäuseabschnitt (2) ausgebildet sind, die rotationssymmetrisch über den Umfang des Gehäuseabschnitts (2) verteilt angeordnet sind.

5. Scheibenwischervorrichtung nach einem der vorhergehenden Ansprüche, **dadurch gekennzeichnet, dass** an dem Anschlussstecker (6) insbesondere rotationssymmetrisch angeordnete Kontaktierungen (4) vorgesehen sind, die mit an dem Gehäuseabschnitt (2) ausgebildeten Kontaktierungen durch Positionierung des Anschlusssteckers (6) an dem Gehäuseabschnitt (2) in Verbindung bringbar sind.

6. Scheibenwischervorrichtung nach einem der vorhergehenden Ansprüche, **dadurch gekennzeichnet, dass** an dem Anschlussstecker (6) ein Dichtelement (5) vorgesehen ist, welches so angeordnet ist, dass es die Kontaktfläche zwischen Gehäuseabschnitt (2) und den Kontaktierungen (4) des Anschlusssteckers (6) im Wesentlichen vollständig von der Umgebung abschirmt.

7. Scheibenwischervorrichtung nach einem der vorhergehenden Ansprüche, **dadurch gekennzeichnet, dass** der Anschlussstecker (6) mittels einer reibschlüssigen oder formschlüssigen Verbindung an dem Gehäuseabschnitt (2) befestigbar ist.

8. Scheibenwischervorrichtung nach einem der vorhergehenden Ansprüche, **dadurch gekennzeichnet, dass** Arettierungsmittel, insbesondere Crimphaken, Bolzen oder Klemmhaken zur Fixierung des Anschlusssteckers (6) in seiner Steckposition an dem Gehäuseabschnitt (2) vorgesehen sind.

9. Scheibenwischervorrichtung nach einen der vorhergehenden Ansprüche, **dadurch gekennzeichnet, dass** der Anschlussstecker (6) mindestens ein Rastelement aufweist, das zur Positionierung des Anschlusssteckers (6) an dem Gehäusegrundkörper (1) in mindestens eine an dem Gehäuseabschnitt (2) ausgebildete Rastvertiefung eingreift.

## Claims

1. Windscreen wiper device for a motor vehicle, in particular for a front window wiper, with a wiper motor which is inserted into a housing basic body (1), wherein the housing basic body (1) has a housing section (2) for the electrical contact connection of the wiper motor, on which housing section a connecting plug (6) or a connecting socket is provided, **characterized in that** the connecting plug (6) or the connecting socket is arranged releaseably on the housing section (2) and is fastenable thereon in at least two plug-in positions, wherein a plurality of cooling and stiffening ribs (8, 9) are provided on the housing section (2).

2. Windscreen wiper device according to Claim 1, **characterized in that** at least one fastening region for the connecting plug (6) is formed on the housing basic body (1).

3. Windscreen wiper device according to Claim 2, **characterized in that** the fastening region is designed as an encircling fastening groove or as a fastening opening (3).

4. Windscreen wiper device according to Claim 3, **characterized in that** a plurality of fastening openings (3) which are arranged distributed in a rotationally symmetrical manner over the circumference of the housing section (2) are formed on the housing section (2).

5. Windscreen wiper device according to one of the preceding claims, **characterized in that** contact connections (4) which are arranged in particular in a rotationally symmetrical manner are provided on the connecting plug (6) and can be brought into connection with contact connections formed on the housing section (2) by positioning the connecting plug (6) on the housing section (2).

6. Windscreen wiper device according to one of the preceding claims, **characterized in that** the connecting plug (6) is provided with a sealing element (5) which is arranged in such a manner that it substantially completely shields the contact surface between housing section (2) and the contact connections (4) of the connecting plug (6) from the environment.

7. Windscreen wiper device according to one of the preceding claims, **characterized in that** the connecting plug (6) is fastenable to the housing section (2) by means of a frictional or interlocking connection.

8. Windscreen wiper device according to one of the preceding claims, **characterized in that** locking means, in particular crimping hooks, bolts or clamping hooks, are provided for fixing the connecting plug (6) in the plug-in position thereof on the housing section (2).

9. Windscreen wiper device according to one of the preceding claims, **characterized in that** the connecting plug (6) has at least one latching element which, for positioning the connecting plug (6) on the housing basic body (1), engages in at least one latching depression formed on the housing section (2).

## Revendications

1. Dispositif d'essuie-glace pour un véhicule automobile, en particulier pour un essuie-glace de pare-brise avant, comprenant un moteur d'essuie-glace qui est inséré dans un corps de base de boîtier (1), le corps de base de boîtier (1) présentant une portion de boîtier (2) pour le contact électrique avec le moteur d'essuie-glace, au niveau de laquelle portion de boîtier est prévue une fiche de raccordement (6) ou une douille de raccordement, **caractérisé en ce que** la fiche de raccordement (6) ou la douille de raccordement est disposée de manière détachable sur la portion de boîtier (2) et peut être fixée sur celle-ci dans au moins deux positions d'enfichage, plusieurs nervures de refroidissement et de rigidification (8, 9) étant prévues sur la portion de boîtier (2).

2. Dispositif d'essuie-glace selon la revendication 1, **caractérisé en ce qu'**au moins une région de fixation pour la fiche de raccordement (6) est réalisée sur le corps de base de boîtier (1).

3. Dispositif d'essuie-glace selon la revendication 2, **caractérisé en ce que** la région de fixation est réalisée sous forme de rainure de fixation périphérique ou sous forme d'ouverture de fixation (3).

4. Dispositif d'essuie-glace selon la revendication 3, **caractérisé en ce que** plusieurs ouvertures de fixation (3) sont réalisées sur la portion de boîtier (2), lesquelles sont réparties avec une symétrie de révolution sur la périphérie de la portion de boîtier (2).

5. Dispositif d'essuie-glace selon l'une quelconque des revendications précédentes, **caractérisé en ce que** des contacts (4) notamment disposés avec une symétrie de révolution sont prévus sur la fiche de raccordement (6), lesquels peuvent être amenés en connexion avec des contacts réalisés sur la portion de boîtier (2) par positionnement de la fiche de raccordement (6) sur la portion de boîtier (2).

6. Dispositif d'essuie-glace selon l'une quelconque des revendications précédentes, **caractérisé en ce qu'**un élément d'étanchéité (5) est prévu sur la fiche de raccordement (6), lequel est disposé de telle sorte qu'il protège essentiellement complètement de l'environnement la surface de contact entre la portion de boîtier (2) et les contacts (4) de la fiche de raccordement (6).

7. Dispositif d'essuie-glace selon l'une quelconque des revendications précédentes, **caractérisé en ce que** la fiche de raccordement (6) peut être fixée à la portion de boîtier (2) au moyen d'une connexion par engagement par friction ou par engagement par correspondance de formes.

8. Dispositif d'essuie-glace selon l'une quelconque des revendications précédentes, **caractérisé en ce que** des moyens de blocage, en particulier des crochets de sertissage, des boulons ou des crochets de serrage sont prévus pour la fixation de la fiche de raccordement (6) dans sa position d'enfichage sur la portion de boîtier (2).

9. Dispositif d'essuie-glace selon l'une quelconque des revendications précédentes, **caractérisé en ce que** la fiche de raccordement (6) présente au moins un élément d'encliquetage qui vient en prise dans au moins un renfoncement d'encliquetage réalisé sur la portion de boîtier (2) pour positionner la fiche de raccordement (6) sur le corps de base de boîtier (1).
